# EUROPEAN PATENT APPLICATION

(11) **EP 4 708 766 A1**
(43) Date of publication of application: **11.03.2026**
(21) Application number: 25197049.7
(22) Date of filing: 20.08.2025
(51) Int. Cl.: H04L 9/08, H04L 9/32, H04L 9/40

(54) **TRUSTED THIRD PARTY ASSISTED PUBLIC KEY DISTRIBUTION**

(30) Priority: 06.09.2024 EP 24198848
(71) Applicant: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: Manganahalli, Sandesh Jayaprakash, 2595 DA 's Gravenhage (NL)
(74) Representative: De Vries & Metman

(57) **Abstract**

A method of obtaining a public key of a second party by a first party comprises authenticating (101) a third party at a system of the first party, establishing (103) a secure connection between the system of the first party and a system of the third party after authenticating the third party, transmitting (105) a request to receive the public key of the second party from the system of the first party to the system of the third party over the secure connection, and receiving (107), at the system of the first party, the public key of the second party from the system of the third party over the secure connection. The request comprises an identifier of the second party and the public key of the second party is associated with the identifier of the second party.

## Description

### FIELD OF THE INVENTION

The invention relates to a method of obtaining a public key of a second party by a first party and a method of providing a public key of a second party to a first party by a third party.

The invention also relates to computer program products enabling systems to perform such methods.

The invention further relates to a system for obtaining a public key of a second party by a first party and a system for providing a public key of a second party to a first party by a third party.

### BACKGROUND OF THE INVENTION

Public key cryptography, also known as asymmetric cryptography, is a foundational technology for securing digital communications. It relies on a pair of keys: a public key, which is shared openly, and a private key, which is kept secret by the owner. The public key is used to encrypt data, while the private key is used to decrypt it. This asymmetric approach ensures that even if someone intercepts the encrypted data, they cannot decrypt it without access to the private key. This system not only secures data transmission but also enables digital signatures, where a message signed with a private key can be verified by anyone with the corresponding public key, ensuring authenticity and integrity.

While obtaining a public key is not that difficult, the challenge lies in obtaining a trusted public key, i.e., verifying the authenticity of the public key to ensure it belongs to the party it claims to be. The conventional way of doing this is for each party to have their public keys signed by another party which everyone trusts (e.g., a registration authority), and this is done in the form of certificate chains.

A drawback of this approach is that having a public key signed by another party which everyone trusts is a cumbersome process. This is because every time one of the communicating parties needs to update their public key or create a new public key, they need to register their updated or new public key with the registration authority and obtain a new certificate. This adds a lot of overhead if a communicating party wishes to regularly update/refresh its public key, e.g., for security and/or privacy reasons. This also adds a lot of overhead if the communicating parties want to use multiple public keys. For instance, a party can choose to use one public key for a first set of users they communicate with and a different public key for a second set of users they communicate with.

### SUMMARY OF THE INVENTION

It is advantageous to provide methods and systems, which can be used to distribute a public key which is trusted by another party without the use of a certificate signed by a certificate authority adding a lot of overhead.

In a first aspect, a method of obtaining a public key of a second party by a first party comprises authenticating a third party at a system of the first party, after authenticating the third party, establishing a secure connection between the system of the first party and a system of the third party, transmitting a request to receive the public key of the second party from the system of the first party to the system of the third party over the secure connection, the request comprising an identifier of the second party, and receiving, at the system of the first party, the public key of the second party from the system of the third party over the secure connection, the public key of the second party being associated with the identifier of the second party. The method may be performed by software running on a programmable device. This software may be provided as a computer program product.

By ensuring that the first party trusts the third party and specifically trusts the third party to only obtain the requested public key from the second party if the third party trusts the second party, the public key of the second party as received by the first party can be trusted by the first party without a certificate signed by a certificate authority being required. This makes it unnecessary for the second party to register an updated or new public key with a registration authority and obtain a new certificate signed by a certificate authority, thereby avoiding the associated overhead for the second party. Additionally, the first party may have less overhead, because it does not need to verify any certificate (or only few certificates), and the first party does not need to have pre-configured in their device the public keys of multiple certificate authorities.

The trusted third party may be, for example, a (e.g., mobile) network operator of both the first and second parties. If the trusted third party is the network operator of only the first party, this network operator may be able to authenticate the second party via the network operator of the second party if it trusts this other network operator. Alternatively, the trusted third party may be, for example, a device provider such as Apple or a third-party application software provider that provides software to which both first and second parties subscribe. Establishing a secure connection may comprise making an existing connection secure or may comprise setting up a new connection after the authentication.

The method may further comprise deriving a shared secret based on the public key of the second party and a private key of the first party. This allows the two communicating parties to establish a shared secret even if they have never communicated with each other and have no shared secrets configured into them. This shared secret may be used to encrypt and decrypt communication between the first and second parties, for example. The shared secret may be derived using a scheme such as Diffie Hellman key exchange.

The method may further comprise receiving a first message and a signature from the system of the second party at the system of the first party, the signature having been created from the first message with a private key of the second party, the private key of the second party corresponding to the public key of the second party, and verifying the signature with the public key of the second party at the system of the first party. The first message may be transmitted directly from the system of the second party to the system of the first party and the received public key of the second party may be used by the first party to verify that the first message really originates from the second party.

The public key of the second party may be associated with a validity time. For example, the second party might be an individual who only wants to use this public key during their vacation.

The public key of the second party might no longer be used after the validity time associated with the public key of the second party has expired. As a first example, after the second party has returned from vacation, any message encrypted with this public key might be ignored by the system of the second party and the system of the first party therefore does not encrypt messages for the second party with the public key of the second party after the validity time of this public key has expired. As a second example, any shared secret derived based on this public key may be discarded.

The method may further comprise enabling the system of the third party to authenticate the first party, receiving, after authentication of the first party by the system of the third party, at the system of the first party, a reciprocal request to receive a public key of the first party from the system of the third party over the secure connection or over another secure connection, and transmitting the public key of the first party from the system of the first party to the system of the third party over the secure connection or the other secure connection. By using mutual authentication between the first party and the third party and also between the second party and the third party, the first and second parties are able to share their public keys with each other, e.g. for deriving a shared secret, in such a way that both parties trust the other party's public key. If the system of the third party would not authenticate the first party, the second party would not be able to trust a public key of the first party received from the third party.

The method may further comprise receiving a second message from the system of the second party at the system of the first party, the second message being encrypted with the public key of the first party, and decrypting the second message with a private key of the first party at the system of the first party, the private key of the first party corresponding to the public key of the first party. The second message may comprise, for example, information that the second party wants to convey or a session key. If the second message comprises a session key, future messages between the first and second parties may be encrypted and decrypted with this session key,

The public key of the first party may be associated with a validity time. For example, the first party might be an individual who only wants to use this public key during their vacation.

The reciprocal request may comprise an identifier of the second party and the method may comprise determining, based on the identifier of the second party, at the system of the first party, whether the public key of the first party can be provided to the second party, and transmitting the public key of the first party from the system of the first party to the system of the third party over the secure connection or the other secure connection only if it is determined that the public key of the first party can be provided to the second party. This provides the first party control over the distribution of the public key of the first party.

The reciprocal request may comprise one or more of an identifier of the first party and an identifier of the second party and the method may comprise selecting the public key of the first party from a plurality of public keys of the first party based on one or more of the identifier of the first party and the identifier of the second party, and transmitting the selected public key of the first party from the system of the first party to the system of the third party over the secure connection or the other secure connection. In other words, a party can choose to use one public key for a first set of users they communicate with and a different public key for a second set of users they communicate with. For example, one or both of the first and second parties may use a different public key for each different party that requests a public key.

In a second aspect, a method of providing a public key of a second party to a first party by a third party comprises enabling a system of the first party to authenticate the third party, after authentication of the third party, establishing a secure connection between the system of the first party and a system of the third party, receiving a request to receive the public key of the second party from the system of the first party at the system of the third party over the secure connection, the request comprising an identifier of the second party, identifying the second party based on the identifier of the second party, and authenticating the second party at the system of the third party.

The method further comprises establishing a further secure connection between the system of the third party and a system of the second party after authenticating the second party, transmitting a further request to receive the public key of the second party from the system of the third party to the system of the second party over the further secure connection, receiving the public key of the second party from the system of the second party at the system of the third party over the further secure connection, and transmitting the public key of the second party from the system of the third party to the system of the first party over the secure connection. The method may be performed by software running on a programmable device. This software may be provided as a computer program product.

The method may further comprise determining whether the further secure connection could be established between the system of the third party and the system of the second party, attempting to retrieve the public key of the second party from storage means of the system of the third party if the further secure connection could not be established, and transmitting the retrieved public key of the second party from the system of the third party to the system of the first party over the secure connection if the public key of the second party was retrieved successfully from the storage means. This allows the first party to obtain the public key of the second party even if the second party is offline. The method could also comprise attempting to retrieve the public key of the second party from the storage means of the system of the third party if the second party is online, but this would provide the second party less control over the distribution of the public key of the second party.

In a third aspect, a method of providing a public key of a second party to a system of a third party comprises enabling the system of the third party to authenticate the second party, after authentication of the second party, establishing a secure connection between a system of the second party and the system of the third party, receiving, after authentication of the second party by the system of the third party, at the system of the second party, a request to receive a public key of the second party from the system of the third party over the secure connection, the request comprising at least one of an identifier of a first party and an identifier of the second party, selecting the public key of the second party from a plurality of public keys of the second party based on at least one of the identifier of the first party and the identifier of the second party, and transmitting the selected public key of the second party from the system of the second party to the system of the third party over the secure connection. The method may be performed by software running on a programmable device. This software may be provided as a computer program product.

In a fourth aspect, a system for obtaining a public key of a second party by a first party comprises at least one processor configured to authenticate a third party, after authenticating the third party, establish a secure connection with a system of the third party, transmit a request to receive the public key of the second party to the system of the third party over the secure connection, the request comprising an identifier of the second party, and receive the public key of the second party from the system of the third party over the secure connection, the public key of the second party being associated with the identifier of the second party.

In a fifth aspect, a system for providing a public key of a second party to a first party by a third party comprises at least one processor configured to enable a system of the first party to authenticate the third party, after authentication of the third party, establish a secure connection with the system of the first party, receive a request to receive the public key of the second party from the system of the first party over the secure connection, the request comprising an identifier of the second party, identify the second party based on the identifier of the second party, authenticate the second party, after authenticating the second party, establish a further secure connection with a system of the second party, transmit a further request to receive the public key of the second party to the system of the second party over the further secure connection, receive the public key of the second party from the system of the second party over the further secure connection, and transmit the public key of the second party to the system of the first party over the secure connection.

In a sixth aspect, a system for providing a public key of a second party to a system of a third party comprises at least one processor configured to enable the system of the third party to authenticate the second party, after authentication of the second party, establish a secure connection with the system of the third party, receive, after authentication of the second party by the system of the third party, a request to receive a public key of the second party from the system of the third party over the secure connection, the request comprising at least one of an identifier of a first party and an identifier of the second party, select the public key of the second party from a plurality of public keys of the second party based on at least one of the identifier of the first party and the identifier of the second party, and transmit the selected public key of the second party to the system of the third party over the secure connection.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

In one aspect, a non-transitory computer-readable storage medium stores a software code portion, the software code portion, when executed or processed by a computer, being configured to perform the method described above.

As will be appreciated by one skilled in the art, aspects of the present invention may take the form of a device, a method or a computer program product. Accordingly, aspects of the present invention may take the form of an entirely hardware implementation, an entirely software implementation (including firmware, resident software, micro-code, etc.) or an implementation combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product in one or more computer readable medium(s) having computer readable program code stored thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code included therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, Python, Go, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to implementations of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various implementations of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a flow chart of a first implementation of the methods;
Fig. 2 is a flow chart with additional steps of a second implementation of the methods;
Fig. 3 is a flow chart with additional steps of a third implementation of the methods;
Fig. 4 is a flow chart of a fourth implementation of the methods;
Fig. 5 is a flow chart with additional steps of a fifth implementation of the methods;
Fig. 6 is a flow chart with additional steps of a sixth implementation of the methods;
Fig. 7 is a flow chart with additional steps of a seventh implementation of the methods;
Fig. 8 is a flow chart with additional steps of an eighth implementation of the methods;
Fig. 9 is a block diagram of an implementation of the system; and
Fig. 10 is a block diagram of an exemplary data processing system for performing the methods of the invention.

Corresponding elements in the drawings are denoted by the same reference numeral.

### DETAILED DESCRIPTION

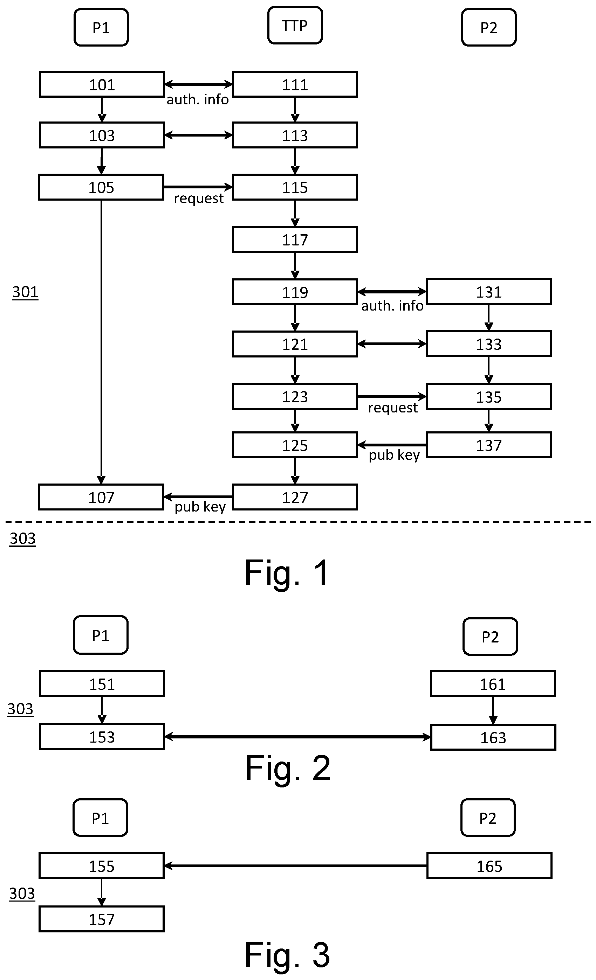

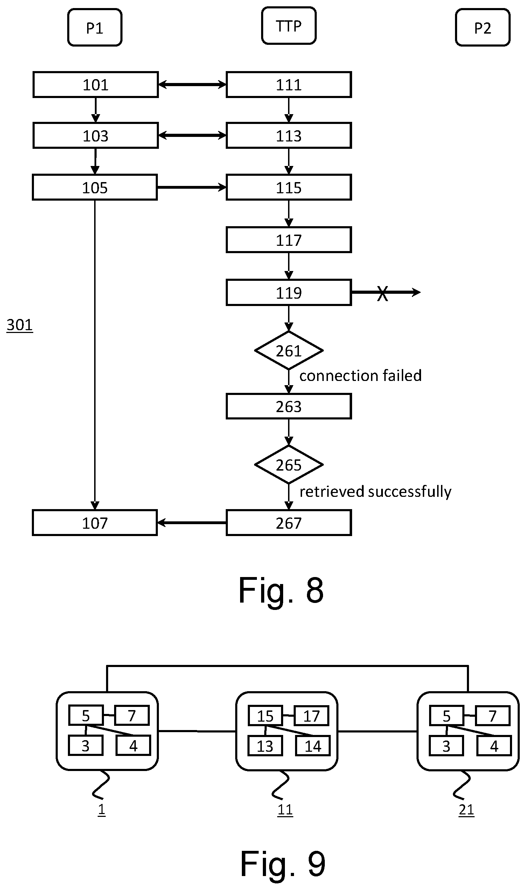

A first implementation of the methods of obtaining a public key of a second party by a first party and providing a public key of a second party to a first party by a third party is shown in Fig. 1. The former method may be performed by system 1 of Fig. 9, for example. The latter method may be performed by system 11 of Fig. 9, for example. The method of Fig. 1 comprises two stages: in stage 301 a public key of the second party is exchanged, and in stage 303 the exchanged public key is used by the first party.

The trusted third party may be a (e.g. mobile) network operator or a cooperation of network operators (with a trusted link between them), for example. If both first and second parties use the same network operators, both parties have a trusted relationship because of mutual authentication between the party's device and network operator. Alternatively, the trusted third party may be a device provider such as Apple. The trust between a party and Apple may be achieved using Apple ID or iCloud ID or some other relationship between Apple and the user of the device, for example. Alternatively, the trusted third party may be, for example, a third-party application software provider that provides software to which both first and second parties subscribe and which both first and second parties trust.

In stage 301, step 111 comprises the system of the third party enabling the system of the first party to authenticate the third party. Step 101 comprises authenticating the third party at the system of the first party. For example, certificate-based authentication or the default network-specified authentication may be used. If the trusted third party is the network operator of only the first party, this network operator may be able to authenticate the second party via the network operator of the second party if it trusts this other network operator. The system of the first party may be able to obtain public keys of multiple other parties in one session while only needing to authenticate the third party once in that session.

Steps 103 and 113 are performed after authenticating the third party. Steps 103 and 113 comprise establishing a secure connection between the system of the first party and the system of the third party. Steps 101 and 113 may comprise establishing a new connection or making an existing connection secure. In the latter case, authentication information may be transmitted from the system of the third party to the system of the first party over a connection which is then made secure by using encryption and/or integrity protection after the third party has been authenticated.

Step 105 comprises transmitting a request to receive the public key of the second party from the system of the first party to the system of the third party over the secure connection established in steps 101 and 113. The request comprises an identifier of the second party, e.g. a phone number or e-mail address. Step 115 comprises the system of the third party receiving this request.

Step 117 comprises the system of the third party identifying the second party based on the identifier of the second party received in step 115, which allows the system of the third party to contact the system of the second party. Step 131 comprises the system of the second party enabling the system of the third party to authenticate the second party. Step 119 comprises authenticating the second party at the system of the third party. For example, password-based authentication, two-factor authentication or the default network-specified authentication may be used.

Steps 121 and 133 are performed after authenticating the third party. Steps 121 and 133 comprise establishing a further secure connection between the system of the third party and the system of the second party. Steps 121 and 133 may comprise establishing a new connection or making an existing connection secure. In the latter case, authentication information may be transmitted from the system of the second party to the system of the third party over a connection which is then made secure by using encryption and/or integrity protection after the second party has been authenticated.

Step 123 comprises transmitting a further request to receive the public key of the second party from the system of the third party to the system of the second party over the further secure connection established in steps 121 and 133. Step 135 comprises the system of the second party receiving this further request.

Step 137 comprises transmitting the public key of the second party from the system of the second party to the system of the third party over the further secure connection. The public key of the second party may be a temporary or long-term public key. The second party may change or discard its temporary public key after some time based on its own preferences. Step 125 comprises the system of the third party receiving the public key of the second party. An optional step performed after step 125 comprises the system of the third party storing the public key of the second party in storage means of the system of the third party.

Step 127 comprises transmitting the public key of the second party from the system of the third party to the system of the first party over the secure connection. Step 107 comprises the system of the first party receiving the public key of the second party.

In stage 303, the public key of the second party is used by the system of the first party. Thus, the first party relies on its trust relationship with the trusted third party to trust and use the public key of second party without any additional verification. No details of stage 303 are provided in Fig. 1. The implementation of Fig. 1 may be combined with the implementations of one or more of Figs. 2 to 8.

A second implementation of the methods of obtaining a public key of a second party by a first party and providing a public key of a second party to a first party by a third party is shown in Fig. 2. The implementation of Fig. 2 is an extension of the implementation of Fig. 1.

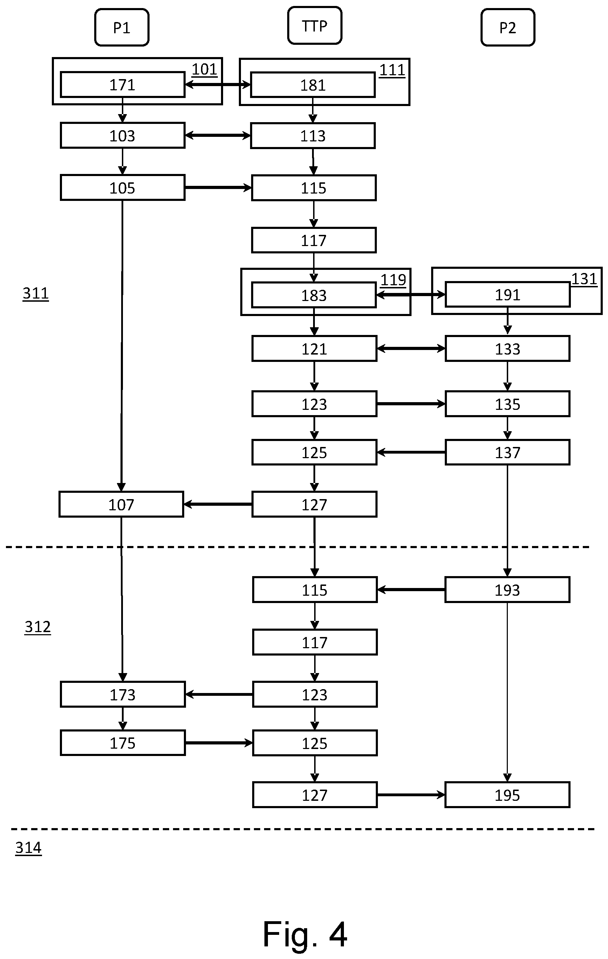

In stage 303, step 151 comprises the system of the first party deriving a shared secret based on the public key of the second party and a private key of the first party. Step 161 comprises the system of the second party deriving the shared secret based on the private key of the second party and the public key of the first party. The system of the second party may obtain the public key of the first party in the manner shown in Fig. 4 or in a different manner.

As a first example, the shared secrets may be derived by using the Diffie Hellman key exchange algorithm. As a second example, the shared secrets may be derived using the algorithm described in the 3GPP TS 33.501 standard, e.g. version 16.3.0 Release 16. TS 33.501 describes the UE using a freshly generated ephemeral private key and a public key of the home network to derive a shared key and the home network using the private key of the home network and an ephemeral public key corresponding to the afore-mentioned ephemeral private key to derive the shared key. The same procedure may be performed between the first and second parties in steps 151 and 161.

In an alternative implementation, the system of the first party generates a shared secret, encrypts the shared secret using the public key of second party, and transmits the encrypted shared secret to the system of the second party.

Steps 153 and 163 comprise establishing another secure channel, this time between the system of the first party and the system of the second party, with the shared secret derived in steps 151 and 161. Data transmitted over this other channel is encrypted and decrypted with this shared secret.

It may be possible to associate the public key of the second party with a validity time. For example, the second party might be an individual who only wants to use this public key during their vacation. This optional validity time helps the second party notify the trusted third party and the first party of its intended duration of use of the public key. In this case, the public key of the second party is no longer used in steps 151 and 161 to derive the shared secret after the validity time associated with the public key of the second party has expired. Any shared secret derived from a public key whose validity time has expired may be discarded.

The implementation of Fig. 2 may be combined with the implementations of one or more of Figs. 3 to 8. In an alternative implementation, the shared secret derived in steps 151 and 161 may be used for another purpose than encrypting and decrypting data transmitted over a channel.

A third implementation of the methods of obtaining a public key of a second party by a first party and providing a public key of a second party to a first party by a third party is shown in Fig. 3. The implementation of Fig. 3 is an extension of the implementation of Fig. 1.

In stage 303, step 165 comprises transmitting a first message and a signature from the system of the second party to the system of the first party. The signature has been created from the first message with a private key of the second party. The private key of the second party corresponds to the public key of the second party. Step 155 comprises the system of the first party receiving this first message.

Step 157 comprises verifying the signature received in step 155 with the public key of the second party at the system of the first party, e.g., by creating a hash of the first message, decrypting the signature with the public key of the second party to obtain a further hash, and comparing the hash and the further hash.

It may be possible to associate the public key of the second party with a validity time. In this case, the public key of the second party is no longer used by the system of the first party to verify the signature in step 157 after the validity time associated with the public key of the second party has expired. The system of the first party then needs to obtain a new public key of the second party and perhaps a new message signed with this new public key. The implementation of Fig. 3 may be combined with the implementations of one or more of Figs. 2, 4-8.

A fourth implementation of the methods of obtaining a public key of a second party by a first party and providing a public key of a second party to a first party by a third party is shown in Fig. 4. The method of Fig. 4 comprises three stages: in stage 311 a public key of the second party is exchanged, in stage 312 a public key of the first party is exchanged, and in stage 314 the exchanged public keys are used by the first party and the second party.

In the implementation of Fig. 4, the secure connection and the further secure connection are established based on mutual authentication. In stage 311, step 181 comprises the system of the third party enabling the system of the first party to authenticate the third party and authenticating the first party at the system of the third party. Step 171 comprises the system of the first party enabling the system of the third party to authenticate the first party and authenticating the third party at the system of the first party. Steps 103 and 113 are performed after this authentication has been completed.

Steps 103 and 113 comprise establishing a secure connection between the system of the first party and the system of the third party. Steps 103 and 113 may comprise establishing a new connection or making an existing connection secure. In the latter case, authentication information may be transmitted from the system of the third party to the system of the first party, and vice versa, over a connection which is made secure after the first party and third party have been authenticated.

Step 105 comprises transmitting a request to receive the public key of the second party from the system of the first party to the system of the third party over the secure connection established in steps 103 and 113. The request comprises an identifier of the second party. Step 115 comprises the system of the third party receiving this request.

Step 117 comprises the system of the third party identifying the second party based on the identifier of the second party received in step 115, which allows the system of the third party to contact the system of the second party. Step 191 comprises the system of the second party enabling the system of the third party to authenticate the second party and authenticating the third party at the system of the second party. Step 183 comprises enabling the system of the second party to authenticate the third party and authenticating the second party at the system of the third party. Steps 121 and 133 are performed after this authentication has been completed.

Steps 121 and 133 comprise establishing a further secure connection between the system of the third party and the system of the second party. Steps 121 and 133 may comprise establishing a new connection or making an existing connection secure. In the latter case, authentication information may be transmitted from the system of the second party to the system of the third party, and vice versa, over a connection which is made secure after the second party and third party have been authenticated.

Step 123 comprises transmitting a further request to receive the public key of the second party from the system of the third party to the system of the second party over the further secure connection established in steps 121 and 133. Step 135 comprises the system of the second party receiving this further request.

Step 137 comprises transmitting the public key of the second party from the system of the second party to the system of the third party over the further secure connection. Step 125 comprises the system of the third party receiving the public key of the second party. Step 127 comprises transmitting the public key of the second party from the system of the third party to the system of the first party over the secure connection. Step 107 comprises the system of the first party receiving the public key of the second party.

In stage 312, step 193 comprises transmitting a reciprocal request to receive the public key of the first party. The reciprocal request is transmitted from the system of the second party to the system of the third party over the further secure connection established in steps 121 and 133. The reciprocal request comprises an identifier of the first party, e.g., a phone number or e-mail address. Step 115 comprises the system of the third party receiving this reciprocal request.

Step 117 comprises the system of the third party identifying the first party based on the identifier of the first party received in step 115, which allows the system of the third party to contact the system of the first party. Step 123 comprises transmitting a further reciprocal request to receive the public key of the first party. The further reciprocal request is transmitted from the system of the third party to the system of the first party over the secure connection established in steps 103 and 113.

Step 173 comprises receiving this further reciprocal request at the system of the first party. Step 175 comprises transmitting the public key of the first party from the system of the first party to the system of the third party over the secure connection. Step 125 comprises the system of the third party receiving the public key of the first party. An optional step performed after step 125 comprises the system of the third party storing the public key of the first party in storage means of the system of the third party.

Step 127 comprises transmitting the public key of the first party from the system of the third party to the system of the second party over the further secure connection. Step 195 comprises the system of the second party receiving the public key of the first party.

In the example of Fig. 4, stage 312 takes place soon after stage 311 and therefore the secure connection established in steps 103 and 113 of stage 311 and the further secure connection established in steps 121 and 133 of stage 311 can be reused in stage 312. If stage 312 takes place at a later time, authentication steps may need to be repeated, and new secure channels may need to be established.

In stage 314, the public key of the second party is used by the system of the first party and the public key of the first party is used by the system of the second party. No details of stage 314 are provided in Fig. 4. The implementation of Fig. 4 may be combined with the implementations of one or more of Figs. 2-3, 5-8.

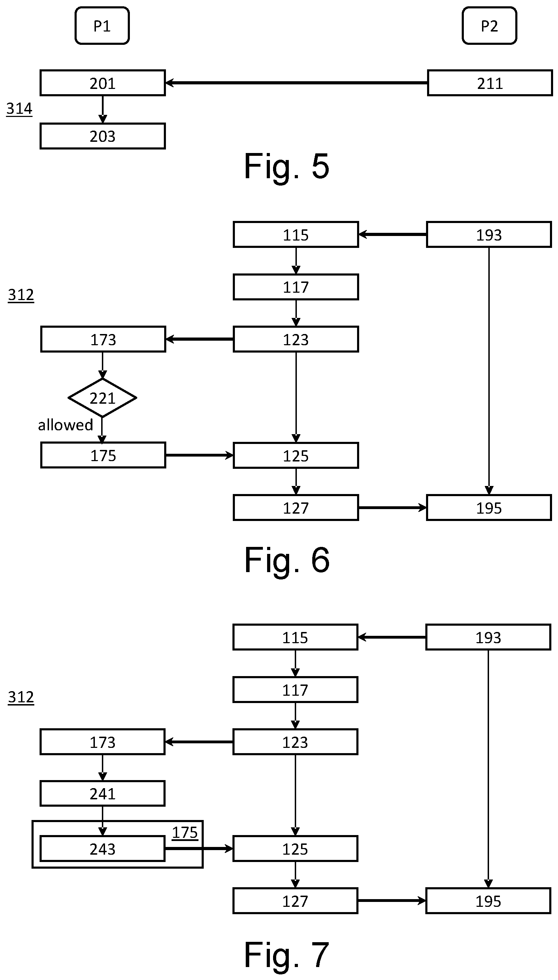

A fifth implementation of the methods of obtaining a public key of a second party by a first party and providing a public key of a second party to a first party by a third party is shown in Fig. 5. The implementation of Fig. 5 is an extension of the implementation of Fig. 4.

In stage 314, step 211 comprises the system of the second party transmitting a second message to the system of the first party. The second message is encrypted with the public key of the first party (received in step 195 of Fig. 4). Step 201 comprise the system of the first party receiving this second message. Step 203 comprises the system of the first party decrypting the second message with a private key of the first party. The private key of the first party corresponds to the public key of the first party.

The second message may comprise a session key. For example, the second party may generate a session key and encrypt it using the public key of the first party and send it to the first party. The first party can decrypt the second message since it has access to its own private key. All messages between the first and second parties can then be encrypted using this session key.

It may be possible to associate the public key of the first party with a validity time. For example, the first party might be an individual who only wants to use this public key during their vacation. In this case, the private key of the first party is no longer used by the system of the first party to decrypt the second message in step 203 after the validity time associated with the public key of the first party has expired. Optionally, the system of the second party may then be informed that the public key of the first party is no longer valid. The implementation of Fig. 5 may be combined with the implementations of one or more of Figs. 2-3, 6-8.

A sixth implementation of the methods of obtaining a public key of a second party by a first party and providing a public key of a second party to a first party by a third party is shown in Fig. 6. The implementation of Fig. 6 is an extension of the implementation of Fig. 4. In the implementation of Fig. 6, the further reciprocal request transmitted by the system of the third party in step 123 of stage 312 and received by the system of the first party in step 173 of Fig. 4 comprises an identifier of the second party and step 221 is performed between steps 173 and 175 of Fig. 4.

Step 221 comprises determining, based on the identifier of the second party received in step 173, at the system of the first party, whether the public key of the first party can be provided to the second party. For example, the first party may wish to provide its public key(s) only to certain types of parties.

Step 175 is only performed if it is determined in step 221 that the public key of the first party can be provided to the second party. If it is determined in step 221 that the public key of the first party cannot be provided to the second party, steps 175, 125, 127, and 195 are not performed. Optionally, the system of the second party may be informed that the public key of the first party cannot be provided. The implementation of Fig. 6 may be combined with the implementations of one or more of Figs. 2-3, 5, 7-8.

A seventh implementation of the methods of obtaining a public key of a second party by a first party and providing a public key of a second party to a first party by a third party is shown in Fig. 7. The implementation of Fig. 7 is an extension of the implementation of Fig. 4. In the implementation of Fig. 7, the further reciprocal request transmitted by the system of the third party in step 123 of stage 312 and received by the system of the first party in step 173 of Fig. 4 comprises at least one of an identifier of the first party and an identifier of the second party, step 175 of Fig. 4 is implemented by step 243, and a step 241 is performed between steps 173 and 243.

Step 241 comprises selecting the public key of the first party from a plurality of public keys of the first party based on at least one of the identifier of the first party and the identifier of the second party, as comprised in the further reciprocal request received in step 173. For example, the first party may use a different identity/identifier for different users or groups of users based on privacy requirements and select the public key based on the identity/identifier used for the second party. Step 243 comprises transmitting the public key of the first party selected in step 241 from the system of the first party to the system of the third party over the secure connection.

The implementation of Fig. 7 may be combined with the implementations of one or more of Figs. 2-3, 5-6, 8. For example, after determining whether the public key of the first party can be provided to the second party based on the identifier of the second party in step 221 of Fig. 6, a public key of the first party which is associated with this identifier of the second party may be selected in step 241 of Fig. 7.

Step 221 of Fig. 6 and/or step 241 of Fig.7 may also be performed by the system of the second party, e.g. between steps 135 and 137 of Fig. 1 or Fig. 4. If step 221 of Fig. 6 is performed by the system of the second party, the further request transmitted by the system of the third party in step 123 of stage 301 or 311 and received by the system of the second party in step 135 comprises an identifier of the first party. If step 241 of Fig. 7 is performed by the system of the second party, the further request transmitted by the system of the third party in step 123 of stage 301 or 311 and received by the system of the second party in step 135 comprises at least one of an identifier of the first party and an identifier of the second party.

An eighth implementation of the methods of obtaining a public key of a second party by a first party and providing a public key of a second party to a first party by a third party is shown in Fig. 8. The implementation of Fig. 8 is an extension of the implementation of Fig. 1. In the implementation of Fig. 8, the system of the third party can also save/cache the public key of the second party (e.g., any user of the system) and additional steps 261, 263, 265, and 267 have been added.

Step 261 is performed after step 119 of Fig. 1 has been performed. Step 261 comprises the system of the third party determining whether the further secure connection could be established between the system of the third party and the system of the second party. If it is not possible in step 119 to contact the system of the second party to authenticate the second party, the further secure connection cannot be established. Steps 121-127 and 131-137 of Fig. 1 (not repeated in Fig. 8) are performed if the further secure connection could be established. Step 263 of Fig. 8 is performed next if the further secure connection could not be established.

Step 263 comprises the system of the third party attempting to retrieve the public key of the second party from storage means of the system of the third party. Step 265 comprises determining if the public key of the second party was retrieved successfully from the storage means. If so, step 267 is performed next. If not, step 267 is not performed and the system of the first party may be informed instead that the public key of the second party cannot be obtained currently.

Step 267 comprises transmitting the public key of the second party retrieved in step 263 from the system of the third party to the system of the first party over the secure connection. Thus, if the second party is offline, the third party can send the cached/saved public key of the second party to the first party. The first party can then, for example, encrypt a message with this public key and include information in the message that allows the second party to select the corresponding private key. The first party may include the used public key in the message, for example. Once the second party is online, it can decrypt the message by using the private key that corresponds to the public key that was used to encrypt the message.

The implementation of Fig. 8 may be combined with the implementations of one or more of Figs. 2-7. In an alternative implementation, the system of the third party may first attempt to retrieve the public key of the second party from storage means of the system of the third party before trying to establish the further secure connection with the system of the second party. In this alternative implementation, step 263 is performed before step 119 and step 261 may be omitted.

Fig. 9 shows a system 1 of a first party, a system 21 of a second party, and a system 11 of a third party. System 1 is an implementation of the system for obtaining a public key of a second party by a first party and system 11 is an implementation of the system for providing a public key of a second party to a first party by a third party.

System 11 of the third party comprises a receiver 13, a transmitter 14, a processor 15, and a memory 17. The processor 15 is configured to enable system 1 of the first party to authenticate the third party via receiver 13 and transmitter 14, after authentication of the third party, establish a secure connection with the system 1 via receiver 13 and transmitter 14, receive a request to receive the public key of the second party from the system 1 over the secure connection via receiver 13, and identify the second party based on an identifier of the second party comprised in the request.

The processor 15 is further configured to authenticate the second party via receiver 13 and transmitter 14, establish a further secure connection with the system 21 of the second party via receiver 13 and transmitter 14 after authenticating the second party, transmit a further request to receive the public key of the second party to the system 21 over the further secure connection via transmitter 14, receive the public key of the second party from the system 21 over the further secure connection via receiver 13, and transmit the public key of the second party to the system 1 over the secure connection via transmitter 14.

System 1 of the first party comprises a receiver 3, a transmitter 4, a processor 5, and a memory 7. The processor 5 is configured to authenticate the third party via receiver 3 and transmitter 4, establish a secure connection with system 11 of the third party via receiver 3 and transmitter 4 after authenticating the third party, transmit a request to receive the public key of the second party to system 11 over the secure connection via transmitter 4, and receive the public key of the second party from system 11 over the secure connection via receiver 3. The request comprises an identifier of the second party and the public key of the second party is associated with the identifier of the second party.

System 21 of the second party comprises receiver 3, transmitter 4, a processor 5, and a memory 7. In the implementation of Fig. 9, the processor 5 of system 21 is configured in a similar manner as the processor 5 of system 1. For example, systems 1 and 21 may run the same software. Therefore, system 1 can obtain the public of the second party and system 21 can obtain the public key of the first party. In an alternative implementation, system 1 can obtain the public of the second party but system 21 cannot obtain the public key of the first party.

In the embodiments shown in Figs. 9, the systems 1, 11, and 21 comprise one processor 5, one processor 15, and one processor 5, respectively. In an alternative embodiment, one or more of the systems 1, 11, and 21 comprise multiple processors. The processors 5 and 15 may be general-purpose processors, e.g., ARM, Qualcomm, AMD, or Intel processors, or application-specific processors. The processors 5 and 15 may run Google Android, Apple iOS, a Unix-based operating system or Windows as operating system, for example.

The receivers 3, 13, and 3 and the transmitters 4, 14, and 4 of the systems 1, 11, and 21, respectively, may use one or more wired or wireless communication technologies such as Ethernet, Wi-Fi, LTE, and/or 5G New Radio to communicate with other devices on the Internet via an access point/base station, or they may use in-person communication like Bluetooth, Wi-Fi direct, QR-code, or a dead drop solution to communicate with other devices. The receiver and the transmitter of a system may be combined in a transceiver.

Systems 1 and 21 may be user equipment such as mobile devices, for example. In this case, the public keys may be pre-configured in the USIM of the user equipment. System 11 may be an internet server, for example. Systems 1, 11, and 21 may comprise other components typical for a digital device.

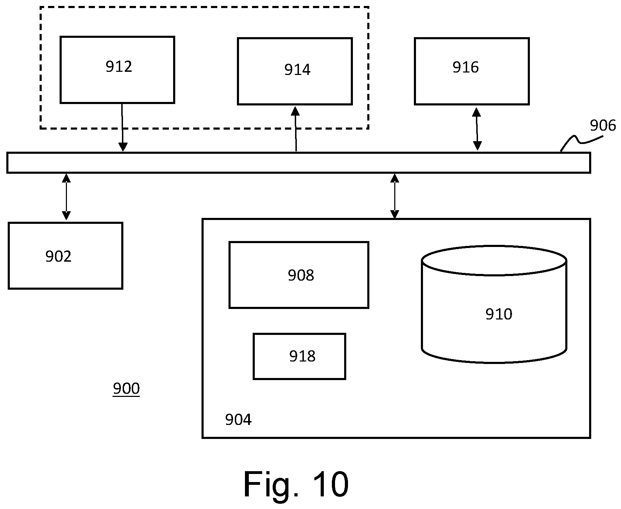

Fig. 10 depicts a block diagram illustrating an exemplary data processing system that may perform the method as described with reference to the flow charts.

As shown in Fig. 10, the data processing system 900 may include at least one processor 902 coupled to memory elements 904 through a system bus 906. As such, the data processing system may store program code within memory elements 904. Further, the processor 902 may execute the program code accessed from the memory elements 904 via a system bus 906. In one aspect, the data processing system may be implemented as a computer that is suitable for storing and/or executing program code. It should be appreciated, however, that the system 900 may be implemented in the form of any system including a processor and a memory that is capable of performing the functions described within this specification. The data processing system may be an Internet/cloud server, for example.

The memory elements 904 may include one or more physical memory devices such as, for example, local memory 908 and one or more bulk storage devices 910. The local memory may refer to random access memory or other non-persistent memory device(s) generally used during actual execution of the program code. A bulk storage device may be implemented as a hard drive or other persistent data storage device. The processing system 900 may also include one or more cache memories (not shown) that provide temporary storage of at least some program code in order to reduce the quantity of times program code must be retrieved from the bulk storage device 910 during execution. The processing system 900 may also be able to use memory elements of another processing system, e.g. if the processing system 900 is part of a cloud-computing platform.

Input/output (I/O) devices depicted as an input device 912 and an output device 914 optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers.

The input and the output devices may be implemented as a combined input/output device (illustrated in Fig. 10 with a dashed line surrounding the input device 912 and the output device 914). An example of such a combined device is a touch sensitive display, also sometimes referred to as a "touch screen display" or simply "touch screen". In such an implementation, input to the device may be provided by a movement of a physical object, such as e.g. a stylus or a finger of a user, on or near the touch screen display.

A network adapter 916 may also be coupled to the data processing system to enable it to become coupled to other systems, computer systems, remote network devices, and/or remote storage devices through intervening private or public networks. The network adapter may comprise a data receiver for receiving data that is transmitted by the systems, devices and/or networks to the data processing system 900, and a data transmitter for transmitting data from the data processing system 900 to the systems, devices and/or networks. Modems, cable modems, and Ethernet cards are examples of different types of network adapter that may be used with the data processing system 900.

As pictured in Fig. 10, the memory elements 904 may store an application 918. The application 918 may be stored in the local memory 908, the one or more bulk storage devices 910, or separate from the local memory and the bulk storage devices. It should be appreciated that the data processing system 900 may further execute an operating system (not shown in Fig. 10) that can facilitate execution of the application 918. The application 918, being implemented in the form of executable program code, can be executed by the data processing system 900, e.g., by the processor 902. Responsive to executing the application, the data processing system 900 may be configured to perform one or more operations or method steps described herein.

The invention may be implemented as a program product for use with a computer system, where the program(s) of the program product define functions. The program(s) may be contained on a variety of non-transitory computer-readable storage media, where, as used herein, the expression "non-transitory computer readable storage media" comprises all computer-readable media, with the sole exception being a transitory, propagating signal. The program(s) may also be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular implementations only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The detailed description has been presented for purposes of illustration, but is not intended to be exhaustive or limited to the implementations in the form disclosed. Many modifications and variations will be apparent to those of ordinary skill in the art without departing from the scope of the present invention.

## Claims

1. A method of obtaining a public key of a second party by a first party, the method comprising:
- authenticating (101) a third party at a system of the first party,
- after authenticating the third party, establishing (103) a secure connection between the system of the first party and a system of the third party,
- transmitting (105) a request to receive the public key of the second party from the system of the first party to the system of the third party over the secure connection, the request comprising an identifier of the second party, and
- receiving (107), at the system of the first party, the public key of the second party from the system of the third party over the secure connection, the public key of the second party being associated with the identifier of the second party.

2. A method as claimed in claim 1, wherein the method further comprises deriving (151) a shared secret based on the public key of the second party and a private key of the first party.

3. A method as claimed in claim 1 or 2, wherein the method further comprises:
- receiving (155) a first message and a signature from the system of the second party at the system of the first party, the signature having been created from the first message with a private key of the second party, the private key of the second party corresponding to the public key of the second party, and
- verifying (157) the signature with the public key of the second party at the system of the first party.

4. A method as claimed in any one of the preceding claims, wherein the public key of the second party is associated with a validity time.

5. A method as claimed in any one of the preceding claims, wherein the method further comprises:
- enabling (171) the system of the third party to authenticate the first party,
- receiving (173), after authentication of the first party by the system of the third party, at the system of the first party, a reciprocal request to receive a public key of the first party from the system of the third party over the secure connection or over another secure connection, and
- transmitting (175) the public key of the first party from the system of the first party to the system of the third party over the secure connection or the other secure connection.

6. A method as claimed in claim 5, wherein the method further comprises:
- receiving (201) a second message from the system of the second party at the system of the first party, the second message being encrypted with the public key of the first party, and
- decrypting (203) the second message with a private key of the first party at the system of the first party, the private key of the first party corresponding to the public key of the first party.

7. A method as claimed in claim 5 or 6, wherein the reciprocal request comprises an identifier of the second party and the method comprises:
- determining (221), based on the identifier of the second party, at the system of the first party, whether the public key of the first party can be provided to the second party, and
- transmitting the public key of the first party from the system of the first party to the system of the third party over the secure connection or the other secure connection only if it is determined that the public key of the first party can be provided to the second party.

8. A method as claimed in any one of claims 5 to 7, wherein the reciprocal request comprises at least one of an identifier of the first party and an identifier of the second party, and the method comprises:
- selecting (241) the public key of the first party from a plurality of public keys of the first party based on at least one of the identifier of the first party and the identifier of the second party, and
- transmitting (243) the selected public key of the first party from the system of the first party to the system of the third party over the secure connection or the other secure connection.

9. A method of providing a public key of a second party to a first party by a third party, the method comprising:
- enabling (111) a system of the first party to authenticate the third party,
- after authentication of the third party, establishing (113) a secure connection between the system of the first party and a system of the third party,
- receiving (115) a request to receive the public key of the second party from the system of the first party at the system of the third party over the secure connection, the request comprising an identifier of the second party,
- identifying (117) the second party based on the identifier of the second party,
- authenticating (119) the second party at the system of the third party,
- after authenticating the second party, establishing (121) a further secure connection between the system of the third party and a system of the second party,
- transmitting (123) a further request to receive the public key of the second party from the system of the third party to the system of the second party over the further secure connection,
- receiving (125) the public key of the second party from the system of the second party at the system of the third party over the further secure connection, and
- transmitting (127) the public key of the second party from the system of the third party to the system of the first party over the secure connection.

10. A method as claimed in claim 9, wherein the method further comprises:
- determining (261) whether the further secure connection could be established between the system of the third party and the system of the second party,
- attempting (263) to retrieve the public key of the second party from storage means of the system of the third party if the further secure connection could not be established, and
- transmitting (267) the retrieved public key of the second party from the system of the third party to the system of the first party over the secure connection if the public key of the second party was retrieved successfully from the storage means.

11. A method of providing a public key of a second party to a system of a third party,
- enabling (131) the system of the third party to authenticate the second party,
- after authentication of the second party, establishing (133) a secure connection between a system of the second party and the system of the third party,
- receiving (135), after authentication of the second party by the system of the third party, at the system of the second party, a request to receive a public key of the second party from the system of the third party over the secure connection, the request comprising at least one of an identifier of a first party and an identifier of the second party,
- selecting the public key of the second party from a plurality of public keys of the second party based on at least one of the identifier of the first party and the identifier of the second party, and
- transmitting (137) the selected public key of the second party from the system of the second party to the system of the third party over the secure connection.

12. A computer program or suite of computer programs comprising at least one software code portion or a computer program product storing at least one software code portion, the software code portion, when run on a computer system, being configured for performing any one of the methods of claims 1 to 11.

13. A system (1) for obtaining a public key of a second party by a first party, the system (1) comprising at least one processor (5) configured to:
- authenticate a third party,
- after authenticating the third party, establish a secure connection with a system (11) of the third party,
- transmit a request to receive the public key of the second party to the system (11) of the third party over the secure connection, the request comprising an identifier of the second party, and
- receive the public key of the second party from the system (11) of the third party over the secure connection, the public key of the second party being associated with the identifier of the second party.

14. A system (11) for providing a public key of a second party to a first party by a third party, the system (11) comprising at least one processor (15) configured to:
- enable a system (1) of the first party to authenticate the third party,
- after authentication of the third party, establish a secure connection with the system (1) of the first party,
- receive a request to receive the public key of the second party from the system (1) of the first party over the secure connection, the request comprising an identifier of the second party,
- identify the second party based on the identifier of the second party,
- authenticate the second party,
- after authenticating the second party, establish a further secure connection with a system (21) of the second party,
- transmit a further request to receive the public key of the second party to the system (21) of the second party over the further secure connection,
- receive the public key of the second party from the system (21) of the second party over the further secure connection, and
- transmit the public key of the second party to the system (1) of the first party over the secure connection.

15. A system (21) for providing a public key of a second party to a system (11) of a third party, the system (21) comprising at least one processor (5) configured to:
- enable the system (11) of the third party to authenticate the second party,
- after authentication of the second party, establish a secure connection with the system (11) of the third party,
- receive, after authentication of the second party by the system (11) of the third party, a request to receive a public key of the second party from the system (11) of the third party over the secure connection, the request comprising at least one of an identifier of a first party and an identifier of the second party,
- select the public key of the second party from a plurality of public keys of the second party based on at least one of the identifier of the first party and the identifier of the second party, and
- transmit the selected public key of the second party to the system (11) of the third party over the secure connection.
